# EUROPÄISCHE PATENTSCHRIFT

(11) **EP 3 337 994 B1**
(45) Veröffentlichungstag und Bekanntmachung des Hinweises auf die Patenterteilung: **04.12.2019**
(21) Anmeldenummer: 16753574.9
(22) Anmeldetag: 18.07.2016
(51) Int. Cl.: F16D 21/06

(54) **KUPPLUNGSEINRICHTUNG FÜR HYBRIDANTRIEB**
CLUTCH DEVICE FOR A HYBRID DRIVE SYSTEM
DISPOSITIF D'EMBRAYAGE POUR MOTORISATION HYBRIDE

(30) Priorität: 20.08.2015 DE 102015215900
(43) Veröffentlichungstag der Anmeldung: 27.06.2018
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(86) Internationale Anmeldenummer: PCT/DE2016/200326
(87) Internationale Veröffentlichungsnummer: WO 2017/028850

(56) Entgegenhaltungen:
- EP-A1- 1 195 537
- DE-A1-102009 052 064
- DE-T5-112012 001 033
- GB-A- 2 442 877
- US-A- 2 993 576

## Beschreibung

Die Erfindung betrifft eine Kupplungseinrichtung. Insbesondere betrifft die Erfindung eine Kupplungseinrichtung für einen Hybridantrieb. Siehe beispielweise GB2442877 als Stand der Technik.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

Der Erfindung liegt die Aufgabe zu Grunde, weitere Varianten für die Gestaltung einer Kupplungseinrichtung anzugeben, die auch in einem Hybridantrieb verwendet werden kann. Insbesondere soll eine vorteilhafte Führung einer hydraulischen Zuleitung zu einer Betätigungseinrichtung zur Betätigung einer der Kupplungen angegeben werden. Die Erfindung löst diese Aufgabe mittels des Gegenstands des unabhängigen Anspruchs. Unteransprüche geben bevorzugte Ausführungsformen wieder.

Eine Kupplungseinrichtung umfasst eine erste und eine zweite Eingangsseite sowie eine erste und eine zweite Ausgangsseite, wobei die Eingangsseiten und die Ausgangsseiten um eine gemeinsame Drehachse drehbar sind. Ferner umfasst die Kupplungseinrichtung eine erste Kupplung zwischen der ersten Eingangsseite und der ersten Ausgangsseite und eine zweite Kupplung zwischen der ersten Eingangsseite und der zweiten Ausgangsseite. Zusätzlich ist eine dritte Kupplung zwischen der ersten Eingangsseite und der zweiten Eingangsseite vorgesehen. Eine erste hydraulische Betätigungseinrichtung ist der ersten Kupplung zugeordnet, eine zweite hydraulische Betätigungseinrichtung der zweiten Kupplung, und eine dritte hydraulische Betätigungseinrichtung der dritten Kupplung. Ein radialer Flansch, der eine axiale Betätigungskraft einer der Betätigungseinrichtungen aufnimmt, umfasst eine radial verlaufende Zuführung für hydraulisches Fluid zu einer der Betätigungseinrichtungen.

Die erste und die zweite Kupplung können radial versetzt angeordnet sein. Es ist jedoch bevorzugt, die erste und die zweite Kupplung axial versetzt anzuordnen.

Der Flansch kann voneinander getrennte, radial verlaufende Zuführungen für hydraulisches Fluid zu unterschiedlichen Betätigungseinrichtungen, insbesondere der ersten und der zweiten Betätigungseinrichtung, umfassen.

Die Zuführung kann von der Betätigungseinrichtung radial nach außen oder radial nach innen verlaufen.

Eine der Ausgangsseiten kann eine Welle mit einer koaxialen Bohrung umfassen, wobei die Zuführung bevorzugterweise in die Bohrung mündet.

Die Zuführung kann auf einer radialen Außenseite mittels eines Verschlusskörpers verschlossen sein, der radial an einer elektrischen Maschine anliegt, die radial außerhalb der der ersten Eingangsseite angebracht ist. Eine weitere Sicherung des Verschlusskörpers kann dann nicht mehr erforderlich sein. Eine Montage oder eine Demontage der Kupplungseinrichtung können dadurch vereinfacht sein.

Bevorzugterweise sind alle drei Kupplungen in einem gemeinsamen Gehäuse angeordnet, das teilweise mit einem flüssigen Medium gefüllt ist. Das flüssige Medium kann insbesondere ein Öl umfassen. Ist eine der Betätigungseinrichtungen hydraulisch, so kann ein Arbeitsmedium der Betätigungseinrichtung das gleiche Fluid wie das Medium umfassen.

Die erste Eingangsseite ist bevorzugterweise zur Verbindung mit einem Läufer einer elektrischen Maschine eingerichtet. Der Läufer ist bevorzugterweise radial außen von einem Ständer der elektrischen Maschine umgeben. Die zweite Eingangsseite ist bevorzugterweise zur Verbindung mit einer Abtriebswelle einer Brennkraftmaschine eingerichtet.

Die Erfindung wird nun mit Bezug auf die beigefügten Figuren genauer beschrieben, in denen:
Fig. 1 eine exemplarische Kupplungseinrichtung in einer ersten Ausführungsform; und
Fign. 2-5 die Kupplungseinrichtung von Fig. 1 in weiteren Ausführungsformen darstellt.

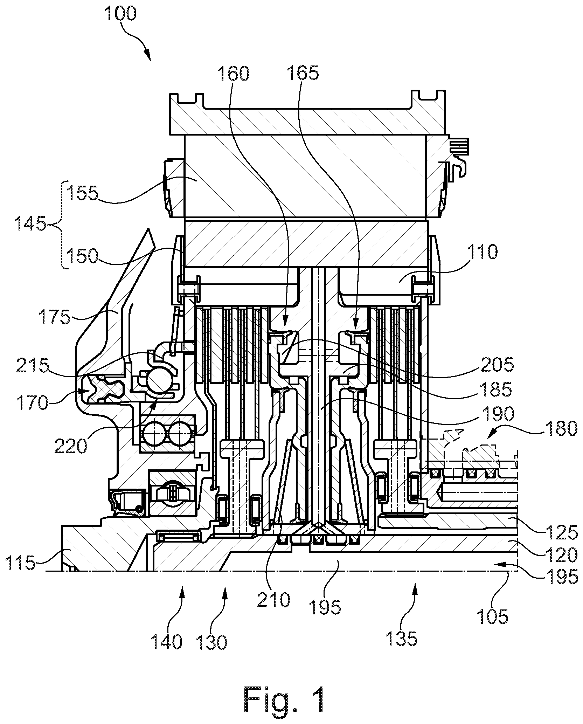

Figur 1 zeigt eine exemplarische Kupplungseinrichtung 100. Um eine Drehachse 105 sind eine erste Eingangsseite 110, eine zweite Eingangsseite 115, eine erste Ausgangsseite 120 und eine zweite Ausgangsseite 125 angeordnet.

Eine erste Kupplung 130 liegt zwischen der ersten Eingangsseite 110 und der ersten Ausgangsseite 120, eine zweite Kupplung 135 zwischen der ersten Eingangsseite 110 und der zweiten Ausgangsseite 125 und eine optionale dritte Kupplung 140 zwischen der ersten Eingangsseite 110 und der zweiten Eingangsseite 115. Die ersten beiden Kupplungen 130 und 135 sind radial oder bevorzugterweise axial zueinander versetzt und bilden eine axiale Doppelkupplung. Die dritte Kupplung 140 ist bevorzugterweise axial zu wenigstens einer der beiden anderen Kupplungen 130 und 135 versetzt.

Die erste Eingangsseite 110 ist zur Verbindung mit einer elektrischen Maschine 145 eingerichtet, die allgemein einen Läufer 150 und einen Ständer 155 umfasst. Bevorzugterweise ist die elektrische Maschine 145 vom Typ des Innenläufers, wobei der Läufer 150 radial innerhalb des Ständers 155 liegt. Dabei ist weiter bevorzugt, dass der Ständer 155 wenigstens eine Magnetspule und der Läufer 150 wenigstens einen Permanentmagneten aufweist. Der Läufer 150 liegt bevorzugterweise radial au-ßerhalb der Kupplungen 130, 135 und 140 und ist in der dargestellten Ausführungsform mittels Nieten mit der ersten Eingangsseite 110 verbunden. Die zweite Eingangsseite 115 ist bevorzugterweise zur Verbindung mit einer Brennkraftmaschine, insbesondere einem Verbrennungsmotor, weiter bevorzugt einer Hubkolbenmaschine, eingerichtet.

Die Ausgangsseiten 120 und 125 sind zur Verbindung mit Eingangswellen eines Doppelgetriebes (nicht dargestellt) eingerichtet. Das Doppelgetriebe ist üblicherweise dazu eingerichtet, jede der Eingangswellen mittels eines anderen Gangradpaars mit einer gemeinsamen Ausgangswelle zu koppeln. Ist der Antriebsstrang in einem Kraftfahrzeug angeordnet, kann die Ausgangswelle letztlich auf ein Antriebsrad des Kraftfahrzeugs wirken. Um eine Gangstufe auszuwählen wird in der Regel eine der Kupplungen 130 oder 135 geschlossen, während die jeweils andere Kupplung 130, 135 geöffnet wird. Bevorzugterweise umfasst das Doppelgetriebe an jeder Getriebewelle mehrere Gangradpaare, die jeweils eine Gangstufe realisieren. Ein Gangradpaar kann üblicherweise ein- oder ausgelegt werden, wenn es mit einer Ausgangswelle 120, 125 verbunden ist, dessen zugeordnete Kupplung 130, 135 gerade geöffnet ist.

Die Kupplungseinrichtung 100 ist insbesondere dazu eingerichtet, im Antriebsstrang eines Kraftfahrzeugs eingesetzt zu werden. Dabei kann das Kraftfahrzeug bevorzugterweise hybrid angetrieben werden, also alternativ durch den Verbrennungsmotor, durch die elektrische Maschine 145 oder durch beide Antriebsmotoren. Soll der Verbrennungsmotor genutzt werden, so wird die dritte Kupplung 140 geschlossen. Soll die elektrische Maschine 145 genutzt werden, so wird sie üblicherweise elektrisch derart angesteuert, dass Drehmoment umgesetzt werden kann. Beide Antriebsmotoren können sowohl positives als auch negatives Drehmoment in den Antriebsstrang einbringen. Die elektrische Maschine 145 kann auch kinetische Energie aus dem Antriebsstrang aufnehmen und in elektrische Energie umwandeln, die beispielsweise in einem Energiespeicher temporär gespeichert werden kann. Durch ihren kompakten Aufbau eignet sich die Kupplungseinrichtung 100 insbesondere zum Einbau vorne quer in einem Kraftfahrzeug.

Der ersten Kupplung 130 ist eine erste Betätigungseinrichtung 160, der zweiten Kupplung 135 eine zweite Betätigungseinrichtung 165 und der dritten Kupplung 140 eine dritte Betätigungseinrichtung 170 zugeordnet. Bevorzugterweise arbeiten alle drei Betätigungseinrichtungen 160, 165 und 170 hydraulisch und sind jeweils dazu eingerichtet, eine axiale Betätigungskraft auf eine der Kupplungen 130, 135 und 140 auszuüben, sodass Reibelemente der Kupplungen 130, 135 oder 140 axial aneinander gepresst werden, um einen Reibschluss zu erzeugen und ein Drehmoment zwischen den Reibelementen zu übertragen. Bevorzugterweise werden die Reibelemente jeweils zwischen der zugeordneten Betätigungseinrichtung 160, 165, 170 und einem axialen Widerlager zusammengepresst. Weiterhin ist bevorzugt, dass die hydraulischen Betätigungseinrichtungen 160, 165 und 170 einzeln aktiv gesteuert werden können, indem etwa mittels eines Ventils oder eine Pumpe ein unter Druck stehendes Medium gezielt in einen hydraulischen Arbeitsraum der jeweiligen Betätigungseinrichtung 160, 165 oder 170 ein- oder aus ihm abgelassen wird. Alternativ dazu kann auch beispielsweise eine fliehölgesteuerte Betätigung vorgesehen sein.

Die drei Kupplungen 130, 135 und 140 sind bevorzugterweise in einem gemeinsamen Gehäuse 175 angeordnet, das wenigstens teilweise mit einem flüssigen Medium 180, insbesondere einem Öl, gefüllt sein kann. Das Medium 180 kann auch als Arbeitsmedium (hydraulisches Fluid) einer der Betätigungseinrichtungen 160, 165 und 170 verwendet werden. Die Kupplungen 130, 135 und 140 sind bevorzugterweise jeweils vom nasslaufenden Typ und können unabhängig voneinander als Einscheiben- oder Mehrscheibenkupplung ausgelegt sein. Weiter bevorzugt sind die erste Kupplung 130 und die zweite Kupplung 135 vom Mehrscheibentyp, um ein feinfühliges Öffnen und Schließen des Drehmomentflusses durch die Kupplungen 130, 135 zu erlauben. Die dritte Kupplung 140 kann auch wie dargestellt vom Einscheibentyp sein, wobei die dritte Kupplung 140 als Schaltkupplung ausgelegt sein kann, die möglichst nicht unter Schlupf betrieben wird.

In der dargestellten Ausführungsform befindet sich axial zwischen der ersten Kupplung 130 und der zweiten Kupplung 135 ein radialer Flansch 185 als Widerlager, gegen das die Kupplungen 130, 135 mittels der jeweils zugeordneten Betätigungseinrichtung 160, 165 gepresst werden können. Betätigungskräfte der Betätigungseinrichtungen 160, 165, 170 sind bevorzugterweise innerhalb der Kupplungseinrichtung 100 abgestützt, sodass keine resultierenden Kräfte nach außen abzustützen sind.

Soll die Kupplungseinrichtung 100 in einem Antriebsstrang ohne die elektrische Maschine 145 eingesetzt werden, kann die dritte Kupplung 140 auch entfallen. Die erste Eingangsseite 110 und die zweite Eingangsseite 115 fallen dann zusammen.

In der dargestellten Ausführungsform sind die drei Kupplungen 130, 135 und 140 axial angeordnet, obwohl in anderen Ausführungsformen auch beispielsweise eine radiale Anordnung der ersten Kupplung 130 und der zweiten Kupplung 135 gewählt sein kann. In der dargestellten, axialen Bauweise liegt der radiale Flansch 185 bevorzugterweise axial zwischen den Kupplungen 130 und 135.

Es wird vorgeschlagen, dass der Flansch 185 eine radial verlaufende Zuführung 190 für ein hydraulisches Fluid 180 umfasst, das insbesondere dem Medium 180 entsprechen kann. In der dargestellten Ausführungsform erstreckt sich eine Zuführung 190 radial vollständig durch den Flansch 185. Auf einer radialen Außenseite ist die Zuführung 190 durch den Läufer 150 der elektrischen Maschine 145 verschlossen; dieser Verschluss kann in einer anderen Ausführungsform jedoch auch durch die erste Eingangsseite 110 erfolgen. Auf der radialen Innenseite öffnet sich die Zuführung 190 in einem Bereich, in dem eine radiale Bohrung in der ersten Ausgangsseite 120 in eine koaxiale Bohrung 195 der ersten Ausgangsseite 120 führt. Die erste Ausgangsseite 120 ist dabei bevorzugterweise als Hohlwelle ausgeführt und die Bohrung 195 verläuft bevorzugterweise konzentrisch zur Drehachse 105.

In einem radial mittleren Bereich des Flanschs 185 ist die erste Betätigungseinrichtung 160 angeordnet, die einen hydraulischen Arbeitsraum 205 umfasst, der beispielsweise mittels einer axialen Bohrung fluid mit der Zuführung 190 verbunden ist. Insgesamt kann in der gezeigten Ausführungsform die Betätigungseinrichtung 160 also aktiviert werden, indem unter Druck stehendes Fluid 190 axial in die erste Ausgangsseite 120 eingeleitet wird. Eine Rückstellung der ersten Betätigungseinrichtung 160 erfolgt bevorzugterweise mittels eines elastischen Elements 210, das insbesondere als Tellerfeder ausgebildet sein kann.

In der dargestellten Ausführungsform erstreckt sich ein hydraulischer Kolben der ersten Betätigungseinrichtung 160 radial nach innen bis in den Bereich der ersten Ausgangsseite 120. Um zu verhindern, dass unter Drehzahleinfluss radial nach außen drängendes Fluid 180 die erste Betätigungseinrichtung 160 ungewollt öffnet, ist bevorzugt, einen Fliehölausgleich vorzusehen, indem Fluid 180, das außerhalb des Arbeitsraums 205 vorliegt und unter dem gleichen Drehzahleinfluss steht, auf die Außenseite des Kolbens geleitet wird.

Die zweite Betätigungseinrichtung 165 kann, wie in Figur 1 dargestellt ist, auf die gleiche Weise mit hydraulischem Fluid versorgt werden. Die zweite Betätigungseinrichtung 165 ist spiegelbildlich zur ersten Betätigungseinrichtung 160 aufgebaut, und die Zuleitungen zur zweiten Betätigungseinrichtung 165 verlaufen bevorzugterweise ebenfalls spiegelbildlich zu denen der ersten Betätigungseinrichtung 160. Der Flansch 185 weist bevorzugterweise eine weitere Zuführung 190 auf, die von der Zuführung 190 für die erste Betätigungseinrichtung 160 getrennt verläuft. An einem radial inneren Ende liegen Öffnungen der beiden Zuführungen 190 bevorzugterweise axial versetzt. Wird Fluid 180 durch eine Welle, insbesondere die erste Ausgangsseite 120, an die Zuführungen 190 übertragen, so trägt die Welle für diesen Zweck bevorzugterweise getrennte Bohrungen. Eine der Zuführungen kann auch in einem sich axial erstreckenden Ringspalt zwischen zwei konzentrischen Wellen, insbesondere der Ausgangsseiten 120 und 125, enden.

Die dritte Betätigungseinrichtung 170 ist in der dargestellten Ausführungsform in einem Teil des Gehäuses 175 integriert angeordnet. Eine hydraulische Zuführung verläuft dabei üblicherweise nicht durch den Bereich des Flanschs 185. Eine Betätigungskraft auf die dritte Kupplung 140 wird hier mittels eines Betätigungselements 215 übertragen, eine Drehbewegung zwischen der dritten Betätigungseinrichtung 170 und der dritten Kupplung 140 wird beispielsweise mittels eines Wälzlagers 220 entkoppelt.

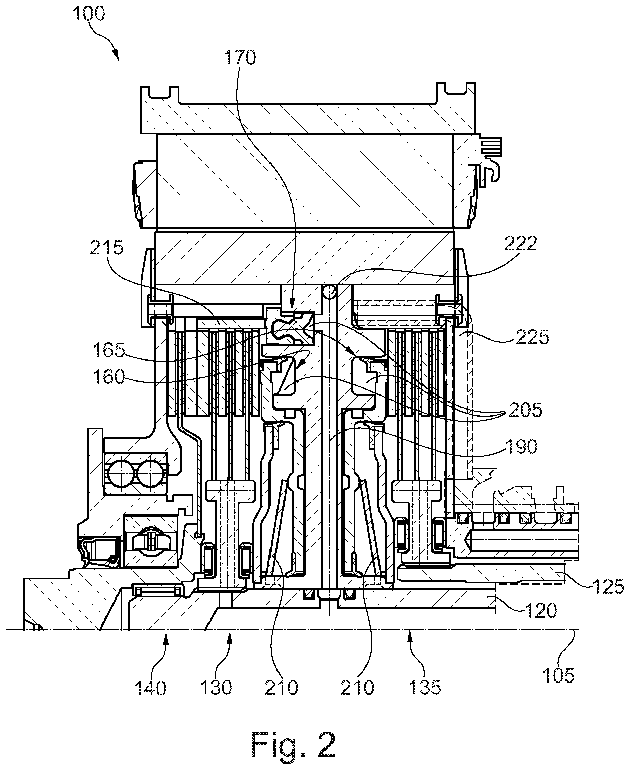

Figur 2 zeigt eine weitere Ausführungsform der Kupplungseinrichtung 100 von Figur 1. Die hier dargestellte Ausführungsform unterscheidet sich von der von Fig. 1 hauptsächlich dadurch, dass die dritte Betätigungseinrichtung 170 im Bereich des Flanschs 185 angeordnet ist. Bevorzugterweise sind die drei Betätigungseinrichtungen 160, 165 und 170 mit dem Flansch 185 integriert ausgeführt, indem der Flansch 185 axiale Vertiefungen bereitstellt, die die hydraulischen Arbeitsräume 205 begrenzen und die mittels der zugeordneten hydraulischen Kolben abgeschlossen sind. Das Betätigungselement 215 zur dritten Kupplung 140 verläuft hier auf der radialen Außenseite der ersten Kupplung 130 in axialer Richtung.

In der dargestellten Ausführungsform ist die Zuführung 190 auf der radialen Außenseite mittels eines Verschlusskörpers 222, der hier als Kugel ausgeführt ist, verschlossen. Eine Sicherung des Verschlusskörpers 222 erfolgt bevorzugterweise durch den radial außen anliegenden Läufer 150 der elektrischen Maschine 145.

Die Zuführungen 190 zu den ersten beiden Betätigungseinrichtungen 160 und 165 verlaufen im Flansch 185 bevorzugterweise radial nach außen statt nach innen und münden beispielsweise in voneinander getrennte Leitungen 225, von denen in Figur 2 nur eine dargestellt ist. Dabei erstrecken sich die Leitungen 225 exemplarisch radial außerhalb der zweiten Kupplung 135 in axialer Richtung.

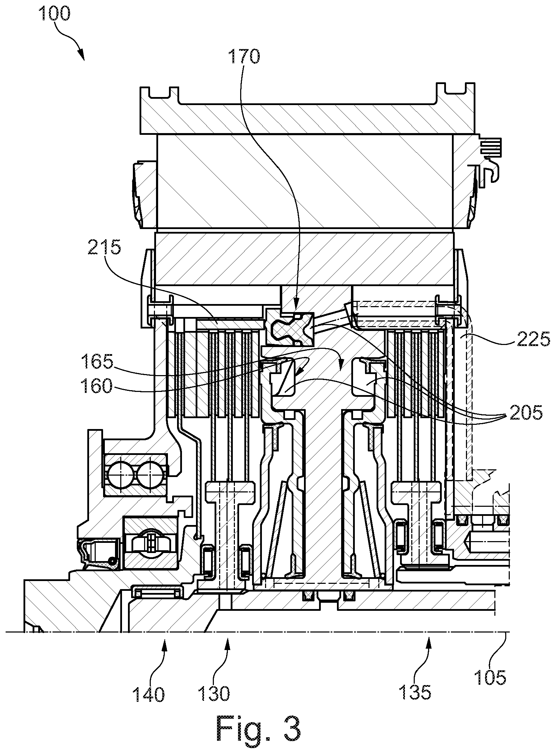

Figur 3 zeigt eine weitere Ausführungsform der Kupplungseinrichtung 100 von Figur 1. Im Unterschied zu der in Figur 2 gezeigten Ausführungsform erfolgt hier die Zuführung durch den Flansch 185 auf der radialen Außenseite der zweiten Kupplung 135 mittels der Leitung 225. Zuführungen 190 für die Betätigungseinrichtungen 160 und 165 können alternativ radial nach innen geführt sein (vgl. Fig. 1) oder radial nach außen (vgl. Fig. 2).

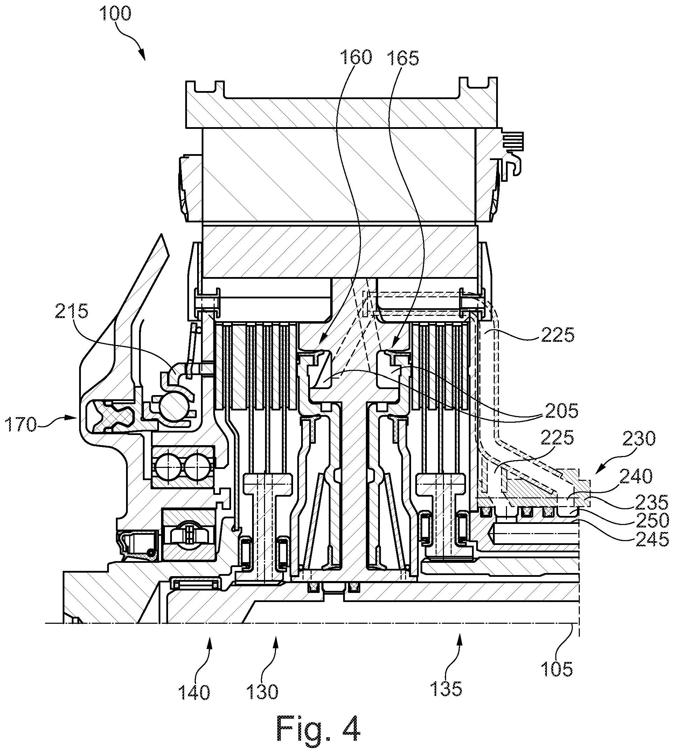

Figur 4 zeigt noch eine weitere Ausführungsform der Kupplungseinrichtung 100 von Figur 1. Die dargestellte Ausführungsform unterscheidet sich von der von Figur 2 gezeigten Ausführungsform hauptsächlich in der Führung der Zuführungen 190 für die Betätigungseinrichtungen 160 und 165. Beide Zuführungen 190 verlaufen im Flansch 185 zunächst radial nach außen und radial außerhalb der zweiten Kupplung 135 axial nach rechts. Dort gehen die Zuführungen 190 in voneinander getrennte Leitungen 225 über, die bevorzugterweise auf einem Umfang um die Drehachse 105 versetzt radial nach innen geführt sind.

Bevorzugterweise enden die Leitungen 225 an einer Entkopplungseinrichtung 230, die hydraulische Verbindungen zu den Leitungen 225 unabhängig von einer Drehung der Leitungen 225 um die Drehachse 105 sicherstellt. Im Wesentlichen umfasst die Entkopplungseinrichtung 230 ein radial äußeres Element 235 mit einem radialen Durchlass 240, der in eine Leitungen 225 mündet, und ein radial inneres Element 245 mit einer Ringnut 250, die axial dem Durchlass 240 gegenüber stehen. Diese Einrichtung ist mit der Führung von hydraulischem Fluid 180 zwischen dem Flansch 185 und der ersten Ausgangsseite 120 in der Ausführungsform von Figur 1 vergleichbar.

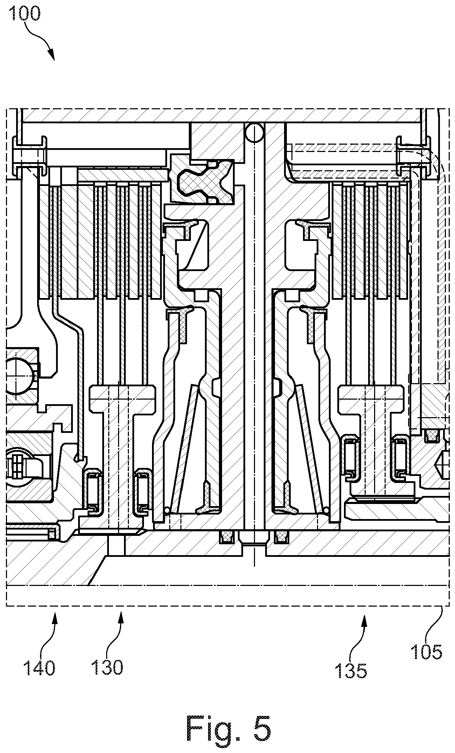

Figur 5 zeigt noch eine weitere Ausführungsform der Kupplungseinrichtung 100 von Figur 1. Diese entspricht im Wesentlichen der Ausführungsform, die in Figur 2 gezeigt ist.

Die Merkmale der oben beschriebenen Ausführungsformen der Figuren 1 bis 5 sind einzeln nach Belieben miteinander kombinierbar, wie ein Fachmann für Kupplungseinrichtungen ohne weiteres erkennen kann.

### Bezugszeichenliste

- 100: Kupplungseinrichtung
- 105: Drehachse
- 110: erste Eingangsseite
- 115: zweite Eingangsseite
- 120: erste Ausgangsseite
- 125: zweite Ausgangsseite

- 130: erste Kupplung
- 135: zweite Kupplung
- 140: dritte Kupplung
- 145: elektrische Maschine
- 150: Läufer
- 155: Ständer

- 160: erste Betätigungseinrichtung
- 165: zweite Betätigungseinrichtung
- 170: dritte Betätigungseinrichtung
- 175: Gehäuse
- 180: flüssiges Medium
- 185: Flansch
- 190: Zuführung
- 195: Bohrung

- 205: hydraulischer Arbeitsraum
- 210: elastisches Element
- 215: Betätigungselement
- 220: Wälzlager
- 222: Verschlusskörper
- 225: Leitung
- 230: Entkopplungseinrichtung
- 235: äußeres Element
- 240: Durchlass
- 245: inneres Element
- 250: Ringnut

## Patentansprüche

1. Kupplungseinrichtung (100) mit:
- einer ersten (110) und einer zweiten Eingangsseite (115);
- einer ersten (120) und einer zweiten Ausgangsseite (125);
- wobei die Eingangsseiten (110, 115) und die Ausgangsseiten (120, 125) um eine gemeinsame Drehachse (105) drehbar sind;
- einer ersten Kupplung (130) zwischen der ersten Eingangsseite (110) und der ersten Ausgangsseite (120);
- einer zweiten Kupplung (135) zwischen der ersten Eingangsseite (110) und der zweiten Ausgangsseite (125); und
- einer dritten Kupplung (140) zwischen der ersten Eingangsseite (110) und der zweiten Eingangsseite (115),
- eine erste hydraulische Betätigungseinrichtung (160), die der ersten Kupplung (130) zugeordnet ist, eine zweite hydraulische Betätigungseinrichtung (165), die der zweiten Kupplung (135) zugeordnet ist, und eine dritte hydraulische Betätigungseinrichtung (170), die der dritten Kupplung (140) zugeordnet ist;
- einen radialen Flansch (180), der eine axiale Betätigungskraft einer der Betätigungseinrichtungen (160, 165, 170) aufnimmt,
- wobei der Flansch (185) eine radial verlaufende Zuführung (190) für hydraulisches Fluid (180) zu einer der Betätigungseinrichtungen (160, 165, 170) umfasst.

2. Kupplungseinrichtung (100) nach Anspruch 1, wobei die erste (130) und die zweite Kupplung (135) axial zueinander versetzt sind.

3. Kupplungseinrichtung (100) nach Anspruch 1 oder 2, wobei der Flansch (185) voneinander getrennte, radial verlaufende Zuführungen (190) für hydraulisches Fluid (180) zur ersten (160) und zweiten Betätigungseinrichtung (165) umfasst.

4. Kupplungseinrichtung (100) nach einem der vorangehenden Ansprüche, wobei die Zuführung von der Betätigungseinrichtung (160, 165, 170) radial nach außen verläuft.

5. Kupplungseinrichtung (100) nach einem der vorangehenden Ansprüche, wobei die Zuführung von der Betätigungseinrichtung (160, 165, 170) radial nach innen verläuft.

6. Kupplungseinrichtung (100) nach Anspruch 5, wobei eine der Ausgangsseiten (120, 125) eine Welle mit einer koaxialen Bohrung (195) umfasst und die Zuführung (190) in die Bohrung (195) mündet.

7. Kupplungseinrichtung (100) nach einem der Ansprüche 5 und 6, wobei die Zuführung (190) auf einer radialen Außenseite mittels eines Verschlusskörpers (220) verschlossen ist, der radial an einer elektrischen Maschine (150) anliegt, die radial außerhalb der ersten Eingangsseite (110) angebracht ist.

8. Kupplungseinrichtung (100) nach einem der vorangehenden Ansprüche, wobei alle drei Kupplungen (130, 135, 140) in einem gemeinsamen Gehäuse (175) angeordnet sind, das teilweise mit einem flüssigen Medium (180) gefüllt ist.

9. Kupplungseinrichtung (100) nach einem der vorangehenden Ansprüche, wobei die erste Eingangsseite (110) zur Verbindung mit einem Läufer (150) einer elektrischen Maschine (145) eingerichtet ist.

10. Kupplungseinrichtung (100) nach einem der vorangehenden Ansprüche, wobei die zweite Eingangsseite (115) zur Verbindung mit einer Abtriebswelle einer Brennkraftmaschine eingerichtet ist.

## Claims

1. Clutch device (100) having:
- a first (110) and a second input side (115);
- a first (120) and a second output side (125);
- it being possible for the input sides (110, 115) and the output sides (120, 125) to be rotated about a common rotational axis (105);
- a first clutch (130) between the first input side (110) and the first output side (120);
- a second clutch (135) between the first input side (110) and the second output side (125); and
- a third clutch (140) between the first input side (110) and the second input side (115),
- a first hydraulic actuating device (160) which is assigned to the first clutch (130), a second hydraulic actuating device (165) which is assigned to the second clutch (135), and a third hydraulic actuating device (170) which is assigned to the third clutch (140);
- a radial flange (180) which absorbs an axial actuating force of one of the actuating devices (160, 165, 170),
- the flange (185) comprising a radially running feed (190) for hydraulic fluid (180) to one of the actuating devices (160, 165, 170).

2. Clutch device (100) according to Claim 1, the first (130) and the second clutch (135) being offset axially with respect to one another.

3. Clutch device (100) according to Claim 1 or 2, the flange (185) comprising radially running feeds (190) which are separated from one another for hydraulic fluid (180) to the first (160) and second actuating device (165).

4. Clutch device (100) according to one of the preceding claims, the feed running from the actuating device (160, 165, 170) radially to the outside.

5. Clutch device (100) according to one of the preceding claims, the feed running from the actuating device (160, 165, 170) radially to the inside.

6. Clutch device (100) according to Claim 5, one of the output sides (120, 125) comprising a shaft with a coaxial bore (195), and the feed (190) opening into the bore (195).

7. Clutch device (100) according to either of Claims 5 and 6, the feed (190) being closed on a radial outer side by means of a closure body (220) which bears radially against an electric machine (150) which is attached radially outside the first input side (110).

8. Clutch device (100) according to one of the preceding claims, all three clutches (130, 135, 140) being arranged in a common housing (175) which is filled partially with a liquid medium (180).

9. Clutch device (100) according to one of the preceding claims, the first input side (110) being set up for connecting to a rotor (150) of an electric machine (145).

10. Clutch device (100) according to one of the preceding claims, the second input side (115) being set up for connecting to an output shaft of an internal combustion engine.

## Revendications

1. Dispositif d'embrayage (100), comprenant :
- un premier (110) et un deuxième (115) côté d'entrée ;
- un premier (120) et un deuxième (125) côté de sortie ;
- les côtés d'entrée (110, 115) et les côtés de sortie (120, 125) pouvant tourner autour d'un axe de rotation commun (105) ;
- un premier embrayage (130) entre le premier côté d'entrée (110) et le premier côté de sortie (120) ;
- un deuxième embrayage (135) entre le premier côté d'entrée (110) et le deuxième côté de sortie (125) ; et
- un troisième embrayage (140) entre le premier côté d'entrée (110) et le deuxième côté d'entrée (115),
- un premier dispositif d'actionnement hydraulique (160) qui est associé au premier embrayage (130), un deuxième dispositif d'actionnement hydraulique (165) qui est associé au deuxième embrayage (135), et un troisième dispositif d'actionnement hydraulique (170) qui est associé au troisième embrayage (140) ;
- une bride radiale (180) qui reçoit une force d'actionnement axiale de l'un des dispositifs d'actionnement (160, 165, 170),
- la bride (185) comprenant une alimentation (190) en fluide hydraulique (180) s'étendant radialement, allant vers l'un des dispositifs d'actionnement (160, 165, 170).

2. Dispositif d'embrayage (100) selon la revendication 1, dans lequel le premier (130) et le deuxième (135) embrayage sont décalés axialement l'un par rapport à l'autre.

3. Dispositif d'embrayage (100) selon la revendication 1 ou 2, dans lequel la bride (185) comprend des alimentations (190) en fluide hydraulique (180) s'étendant radialement, séparées l'une de l'autre, allant vers le premier (160) et le deuxième (165) dispositif d'actionnement.

4. Dispositif d'embrayage (100) selon l'une quelconque des revendications précédentes, dans lequel l'alimentation depuis le dispositif d'actionnement (160, 165, 170) s'étend radialement vers l'extérieur.

5. Dispositif d'embrayage (100) selon l'une quelconque des revendications précédentes, dans lequel l'alimentation depuis le dispositif d'actionnement (160, 165, 170) s'étend radialement vers l'intérieur.

6. Dispositif d'embrayage (100) selon la revendication 5, dans lequel l'un des côtés de sortie (120, 125) comprend un arbre avec un alésage coaxial (195) et l'alimentation (190) débouche dans l'alésage (195).

7. Dispositif d'embrayage (100) selon l'une quelconque des revendications 5 et 6, dans lequel l'alimentation (190) est fermée au niveau d'un côté extérieur radial au moyen d'un corps de fermeture (220) qui s'applique radialement contre une machine électrique (150) qui est montée radialement à l'extérieur du premier côté d'entrée (110).

8. Dispositif d'embrayage (100) selon l'une quelconque des revendications précédentes, dans lequel tous les trois embrayages (130, 135, 140) sont disposés dans un boîtier commun (175) qui est rempli en partie avec un milieu fluide (180).

9. Dispositif d'embrayage (100) selon l'une quelconque des revendications précédentes, dans lequel le premier côté d'entrée (110) est prévu pour être connecté à un rotor (150) d'une machine électrique (145).

10. Dispositif d'embrayage (100) selon l'une quelconque des revendications précédentes, dans lequel le deuxième côté d'entrée (115) est prévu pour être connecté à un arbre de prise de force d'un moteur à combustion interne.
